# EUROPEAN PATENT APPLICATION

(11) **EP 4 756 076 A1**
(43) Date of publication of application: **10.06.2026**
(21) Application number: 24217911.7
(22) Date of filing: 05.12.2024
(51) Int. Cl.: C25B 1/04, B01D 61/00, C01B 32/50, C25B 1/23, C25B 15/02, C25B 15/08

(54) **PROCESS FOR PRODUCING CARBON MONOXIDE BY ELECTROLYSIS OF CARBON DIOXIDE**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: Barwe, Stefan, 60388 Frankfurt am Main (DE); Cusati, Giuseppe, 60388 Frankfurt am Main (DE); Marras, Elena, 60388 Frankfurt am Main (DE)
(74) Representative: Air Liquide

(57) **Abstract**

A process for producing a carbon monoxide rich product stream by electrolysis of carbon dioxide in an electrolyzer. Due to separation of the respective anode and cathode side product streams, a first off-gas stream containing carbon monoxide is generated at the cathode side, whereas a second off-gas stream containing oxygen is generated at the anode side. Both off-gas streams are supplied to an oxidizing device, in which the oxygen of the second off-gas stream is at least partially reacted with carbon monoxide present in the first off-gas stream to form carbon dioxide, whereby an oxygen depleted stream containing carbon dioxide is formed and recycled to the electrolyzer. A control process is applied which enables a controlled oxidation of carbon monoxide with oxygen to form carbon dioxide. Optionally, also hydrogen contained in the first off-gas stream is converted in the oxidizing device to form water.

## Description

The invention relates to a process and an arrangement for producing a carbon monoxide containing product by the electrochemical reduction of carbon dioxide in an electrolyzer.

Carbon monoxide (CO) is an important raw material for the chemical industry and can be produced, for example, by steam reforming or dry reforming of hydrocarbonrich feedstock such as natural gas.

Electrolysis of carbon dioxide is a more environmentally friendly alternative to these production processes, as it is independent of the availability of fossil raw materials and can return carbon dioxide produced in chemical production processes or power plants to the carbon cycle instead of emitting it into the atmosphere with the known consequences.

In carbon dioxide electrolysis, carbon monoxide is formed at the cathode by the reduction of carbon dioxide, while oxygen is formed at the anode by the oxidation of an oxygen moiety having oxygen in an oxidation number lower than zero. Accordingly, a carbon dioxide stream is fed to the cathode space of an electrolyzer, whilst a water containing stream is fed to the anode space.

Depending on the process conditions of a carbon dioxide electrolysis and the catalyst used, other valuable products such as hydrogen, methane, ethane and formic acid can be formed on the cathode side in addition or as an alternative to carbon monoxide. In particular, in the case of co-electrolysis with water, a synthesis gas containing carbon monoxide and hydrogen can be formed on the cathode side, whereby the amount of hydrogen formation depends on the extent of the excess carbon dioxide present in the feed streams, the selectivity of the catalyst and the proton availability.

In a co-electrolysis with water at a proton exchange membrane (PEM) based electrolyzer system, the following electrochemical reactions take place:

| | |
|---|---|
| Cathode: | CO₂ + 2 e⁻ + 2 H⁺ → CO + H₂O |
| | 2 e⁻ + 2 H⁺ → H₂ |
| Anode: | 2 H₂O → O₂ + 4 H⁺ + 4 e⁻ |

In a PEM based electrolysis system, protons migrate through an ion-selective membrane from the anode side to the cathode side of an electrolysis cell. On the cathode side, the two half-cell reactions described above compete with regard to the formation of hydrogen and carbon monoxide, whereby a product gas with variable composition can be obtained.

In the case that pure carbon monoxide should be obtained, the aim of the electrolyzer setup and the control of the process conditions is to suppress the formation of hydrogen as much as possible and to promote the formation of carbon monoxide. For that purpose, polymer electrolyte membranes are used, which preferably conduct anions, in particular hydroxide anions, carbonate anions or bicarbonate anions. The electrolysis is then performed in an aqueous alkaline medium, for example low concentrated potassium hydroxide solution, carbonate solution or bicarbonate solution.

In such an alkaline system for performing carbon dioxide electrolysis, for example the following electrochemical reactions take place:

| | |
|---|---|
| Cathode: | CO₂ + 2 e- + H₂O → CO + 2 OH⁻ |
| Anode: | 2 OH⁻ → ½ O₂ + H₂O + 2 e⁻ |

Usually, the conversion of carbon dioxide to carbon monoxide is never complete, which means that the gas mixture produced on the cathode side contains carbon dioxide in addition to carbon monoxide (and optionally hydrogen). Furthermore, it is known from the pertinent literature that carbon dioxide not converted at the cathode dissolves in water in the form of carbonate ions or hydrogen carbonate ions. These anions migrate to the anode side of the respective electrolysis cell and are released there, after oxidation of the carbonate or hydrogen carbonate bound oxygen, in the form of gaseous carbon dioxide together with the oxygen formed as the anode product. In other words, unreacted carbon dioxide is found in the respective product gas mixtures on both the anode and the cathode side.

The carbon monoxide product generated on the cathode side is to be produced in the highest possible purity, either as pure carbon monoxide or as a synthesis gas mixture consisting of carbon monoxide and hydrogen. This means that the carbon dioxide on the cathode side has to be separated from the aforementioned gases. Since this carbon dioxide is not to be emitted into the atmosphere, it should be recycled as a reactant to the feedstock stream of the electrolysis system.

The same applies in principle to the anode side. Although the oxygen produced here is often not further utilized and is released into the atmosphere, this then becomes a problem if this oxygen stream contains significant amounts of carbon dioxide. Thus, on the anode side, too, the carbon dioxide must be separated from the oxygen product stream, and the separated carbon dioxide must then be recycled as a reactant to the feedstock stream of the electrolysis system. Here, a problem is that the separated carbon dioxide will always contain some residual oxygen, depending on the separation method use, which is detrimental to the electrolyzer system as it causes degradation of silver based electrodes thus leading to an overall lower performance.

The object of the present invention is therefore to provide a process for the production of an electrochemically generated gas product which contains at least carbon monoxide as a product gas and optionally hydrogen as a further product gas, which enables the utilization of unreacted carbon dioxide within the process in the most efficient manner possible, thereby minimizes carbon dioxide emissions and electrode degradation.

US 10,494,728 B2 discloses the purification of carbon monoxide at the cathode side of a solid oxide electrolysis cell (SOEC) system by means of a pressure swing adsorption (PSA) system. The PSA off-gas containing a mixture of carbon dioxide and carbon monoxide is recycled back into the electrolysis system. The carbon monoxide present in the recycle stream is required to ensure a reductive atmosphere in the system thus avoiding system degradation. From the recycle stream, a purge stream is separated as a substream to avoid the accumulation of inert gas components within the closed loop system, of which the recycle stream forms a part thereof. As the purge stream contains toxic carbon monoxide, the purge stream is directed to a catalytic or thermal oxidizer which converts any carbon monoxide to carbon dioxide. The separation of carbon dioxide from the anode product stream and its recycle to the carbon dioxide feedstock is not considered.

According to EP 3 885 469 A1, oxygen is removed from a gas mixture containing carbon dioxide and oxygen generated on the anode side by burning this oxygen in a boiler. This produces a pure carbon dioxide stream, which is discharged from the boiler and can be recycled as a reactant stream to the carbon dioxide feedstock stream of the electrolysis system. Such a boiler requires additional material input in the form of a fuel, for example a hydrocarbon fuel such as natural gas to convert the oxygen to carbon dioxide.

A further object of the present invention is thus to at least in part overcome the disadvantages of the prior art.

According to one aspect of the invention, at least one of the underlying problems is at least partially solved by a process for producing a carbon monoxide containing product by electrolysis of carbon dioxide comprising
(a) Providing a first electrolysis medium comprising a first feedstock stream containing carbon dioxide and a recycle stream containing carbon dioxide, and providing a second electrolysis medium comprising a second feedstock stream containing water;
(b) Converting the first and second electrolysis medium in an electrolyzer, which comprises multiple electrolysis cells, each cell comprising a cathode space for forming a cathode product and an anode space for forming an anode product, wherein
   - in the respective cathode spaces a cathode product stream is formed, which contains carbon monoxide formed by the electrochemical reduction of carbon dioxide of the first electrolysis medium and which contains non-converted carbon dioxide, and
   - in the respective anode spaces an anode product stream is formed, which contains oxygen and non-converted carbon dioxide;
(c) Separating carbon monoxide from the cathode product stream in a first separation device to form a carbon monoxide rich product stream and a first off-gas stream containing carbon monoxide and carbon dioxide, and determining the carbon monoxide concentration in the first off-gas stream by means of a first analyzer;
(d) Separating oxygen from the anode product stream in a second separation device to form an oxygen rich product stream and a second off-gas stream containing oxygen and carbon dioxide,
(e) Supplying the first off-gas stream and the second off-gas stream to an oxidizing device, in which the oxygen of the second off-gas stream is at least partially reacted with carbon monoxide present in the first off-gas stream to form carbon dioxide, whereby an oxygen-depleted stream containing carbon dioxide is formed;
(f) Transmitting a first control signal, which represents the concentration of carbon monoxide in the first off-gas stream, from the first analyzer to a control unit, wherein the control unit is configured for controlling the second separation device such that the second off-gas stream has a predetermined oxygen concentration, wherein said predetermined oxygen concentration is adapted for the reaction of carbon monoxide with oxygen in a predetermined ratio to form carbon dioxide in the oxidizing device;
(g) Withdrawing said oxygen-depleted stream containing carbon dioxide from the oxidizing device to form the recycle stream, and combining said recycle stream with the first feedstock stream to form the first electrolysis medium.

According to the invention, a first off-gas stream is produced in a first separation device and a second off-gas stream is produced in a second separation device. In the first separation device, a carbon monoxide rich stream is produced as the main cathode side product stream. In the second separation device, an oxygen rich stream is produced as the main anode side product stream. The oxygen rich stream may be utilized further or vented to the atmosphere. Due to the migration of carbon dioxide from the cathode spaces to the anode spaces of the electrolyzer, carbon dioxide is contained in the anode side product stream and thus is separated forming part of the off-gas stream of the second separation device along with residual amounts of oxygen not separated by the second separation device. Due to the fact that the conversion of carbon dioxide to carbon monoxide in the cathode spaces of the electrolyzer is not complete, carbon dioxide is contained in the cathode side product stream and thus is separated forming part of the off-gas stream of the first separation device along with residual amounts of carbon monoxide not separated by the first separation device. The first and the second off-gas stream are each supplied to an oxidizing device, for instance an oxidizer. In the oxidizing device, oxygen contained in the second off-gas stream is utilized for the conversion of carbon monoxide contained in the first off-gas stream to carbon dioxide. Thereby, the oxygen content and the carbon monoxide content is reduced by means of the oxidizing device, which results in a recycle stream withdrawn from the oxidizing device which is depleted in oxygen and carbon monoxide, and therefore enriched in carbon dioxide. Due to the lowered oxygen content of said recycle stream, it can be recycled to the inlet section of the electrolyzer without negative impact or at least reduced negative impact on the lifetimes of the electrodes which are used in the electrolyzer. Furthermore, the carbon of the carbon monoxide contained in the first off-gas stream is at least partially converted to carbon dioxide, and thus can be utilized as reactant for the cathode side electrochemical reduction by forming part of the first electrolysis medium. Furthermore, carbon dioxide contained in the first and second off-gas streams which remains unconverted in the oxidizing device may be recycled to the inlet section of the electrolyzer in its entirety. Hence, the all-over process is designed such that carbon present in the process is either converted to form the carbon monoxide product or is re-used as reactant for the electrochemical conversion reactions within the electrolyzer. Furthermore, the carbon monoxide concentration in the first off-gas stream is determined by means of a first analyzer. Based on this information, a first control signal, which represents the concentration of carbon monoxide in the first off-gas stream determined by the first analyzer, is transmitted from the first analyzer to a control unit. The control unit is configured for controlling the second separation device such that the second off-gas stream has a predetermined oxygen concentration, wherein said predetermined oxygen concentration is adapted for the reaction of carbon monoxide with oxygen in a predetermined ratio to form carbon dioxide in the oxidizing device. That is, the control unit controls the second separation device such that the second off-gas stream has a defined oxygen concentration and thus a defined oxygen amount. This allows the reaction in the oxidizer to be controlled in the sense that carbon monoxide and oxygen react in the oxidizer in a desired and predefined ratio. This makes the process as a whole easier to control, for example by minimizing the quantities of oxygen and carbon monoxide remaining in the oxidizer after the reaction.

Preferably, said predetermined oxygen concentration is adapted for the reaction of carbon monoxide with oxygen such that the oxygen is completely consumed. Thus, an oxygen-free recycle stream is obtained.

A person skilled in the art is familiar with methods that can be used to obtain a predetermined oxygen concentration in the second exhaust gas stream. For example, when a pressure swing adsorption (PSA) unit is used as the second separation device, a stream with a desired oxygen concentration can be obtained by setting a defined cycle time of the PSA unit. The accuracy of this may be improved by determining the oxygen concentration in the anode product stream by the first analyzer or a further analyzer. However, this is not mandatory, in particular when the oxygen concentration in the anode product stream has a constant composition. For the present invention, it is only decisive that the carbon monoxide concentration in the first off-gas stream is known and that the oxygen concentration in the second off-gas stream is then set accordingly.

The recycle stream is depleted of oxygen compared to the second off-gas stream, in particular with regard to the total quantity of oxygen contained in the second off-gas stream. Furthermore and preferably, the recycle stream is depleted of carbon monoxide compared to the first off-gas stream, in particular with regard to the total quantity of carbon monoxide contained in the first off-gas stream. That is, the concentration of oxygen and preferably carbon monoxide is not only lowered in the recycle stream by means of mixing the first and second off-gas streams, but by means of the chemical reaction of carbon monoxide and oxygen within the oxidizing device.

The first electrolysis medium is formed by the first feedstock stream and the recycle stream. The first electrolysis medium is preferably supplied to the cathode side, which means the cathode spaces of the electrolyzer. The first feedstock stream has preferably a carbon dioxide content of at least 90 Vol.-%, or at least 95 Vol.-%, or at least 98 Vol.-%, or at least 99 Vol.-%. Preferably, the first feedstock stream is a pure carbon dioxide stream. The first feedstock stream may contain residual amounts of water, for example a residual amount of 1 Vol.-% water or less, or 0.5 Vol.-% water or less, or 1000 ppmv water or less. The recycle stream may contain carbon monoxide in case the conversion of carbon monoxide with oxygen in the oxidizing device to form carbon dioxide is not complete. Preferably, the carbon monoxide content of the recycle stream is 10 Vol.-% or less, or 5 Vol.-% or less, or 2 Vol.-% or less, or 1 Vol.-% or less, or 1000 ppmv or less, or 500 ppmv or less, or 100 ppmv or less. The recycle stream may contain oxygen in case the conversion of oxygen with carbon monoxide to form carbon dioxide in the oxidizing device is not complete. Preferably, the oxygen content of the recycle stream is 2 Vol.-% or less, or 1 Vol.-% or less, or 1000 ppmv or less, or 500 ppmv or less, or 100 ppmv or less. Further preferred, the recycle stream is free of carbon monoxide. Also preferred, the recycle stream is free of oxygen. In the context of the invention, "free of" means that the content of the respective component does not exceed an amount of preferably 50 ppmv, or 10 ppmv, or 1 ppmv. Preferably, the conversion of carbon monoxide and oxygen to form carbon dioxide in the oxidizing device is complete. That is to say, preferably, the process is controlled in such a way that carbon monoxide and oxygen are present in the oxidizing device in a stoichiometric ratio that allows complete conversion of both reactants.

The second electrolysis medium comprises a second feedstock stream containing water. The second electrolysis medium is preferably supplied to the anode side, which means the anode spaces of the electrolyzer. The second feedstock stream may be an aqueous stream with a pH value of more than 7 which contains at least one electrolyte. For example, the second feedstock stream may be an aqueous solution of a hydroxide, for example potassium hydroxide, an aqueous solution of a carbonate, for example potassium carbonate, or an aqueous solution of a bicarbonate, for example potassium bicarbonate. The electrolyte concentration of the aqueous solution may be 1 molar or less, or 0.1 molar or less. The second feedstock stream also may be a pure water stream having a pH value of 7 or less.

The electrolyzer may contain electrolysis cells which contain polymer electrolyte membranes, which preferably conduct anions, in particular hydroxide anions, carbonate anions or bicarbonate anions. The electrolysis is then preferably performed in an aqueous alkaline medium as described above. As an alternative, but less preferred, the electrolyzer may contain electrolysis cells which contain proton exchange membranes which preferably conduct protons. The electrolysis is then preferably performed in a pure water medium as described above.

The first and second electrolysis medium are electrochemically converted in the electrolyzer by supplying a direct electrical current to the electrolyzer. The electrolyzer comprises multiple electrolytic cells. Preferably, the electrolysis is carried out at an industrial scale, in which case the electrolyzer comprises several stacks of electrolytic cells. Each electrolytic cell has an anode within an anode space and a cathode within a cathode space. The respective anode and cathode spaces are separated by a membrane or diaphragm. The multiplicity of electrolytic cells form a plurality of anode spaces and cathode spaces, in which the respective electrochemical reactions take place. In the respective cathode spaces, carbon dioxide contained in the first electrolysis medium is reduced to form carbon monoxide. As the reduction of carbon dioxide to form carbon monoxide is not complete, the respective cathode product stream contains carbon monoxide and carbon dioxide. In the respective anode spaces, in particular water-bound oxygen deriving from the water containing second feedstock stream having an oxygen number of minus two is oxidized to form molecular oxygen. Due to the migration of carbon dioxide from the respective cathode spaces to the respective anode spaces of the electrolyzer, also carbon dioxide is contained in the anode side product stream along with oxygen.

In the first separation device, carbon monoxide is separated from the cathode product stream to form a carbon monoxide rich product stream and the first off-gas stream which contains carbon dioxide and carbon monoxide, in particular residual amounts of carbon monoxide not separated from the cathode product stream by the first separation device. The carbon monoxide rich product stream may have a carbon monoxide content of at least 90 Vol.-%, or at least 95 Vol.-%, or at least 99 Vol.-%. The carbon monoxide rich product stream may be subject to a further separation step to further enrich the carbon monoxide content in the respective product stream. The first separation device may comprise at least one adsorption based separation unit, for example a pressure swing adsorption unit or a temperature swing adsorption unit, preferably a pressure swing adsorption unit. As an alternative, the first separation device may comprise at least one unit operating at low temperatures, in particular a so-called cryogenic temperature. An example for such a separation unit is a carbon monoxide cold box. However, the type of separation device is not crucial to carry out the present invention. It is only crucial that in the first separation device, a first stream is formed which is the carbon monoxide rich product stream, and a second stream is formed which is the first off-gas stream containing carbon monoxide and carbon dioxide.

In the second separation device, oxygen is separated from the anode product stream to form an oxygen rich product stream and the second off-gas stream which contains carbon dioxide and oxygen, in particular residual amounts of oxygen not separated from the anode product stream by the second separation device. The oxygen rich product stream may have an oxygen content of at least 90 Vol.-%, or at least 95 Vol.-%, or at least 99 Vol.-%. The oxygen rich product stream may be subject to a further separation step to further enrich the oxygen content in the respective product stream, in particular in case the oxygen rich product stream is further utilized. The second separation device may comprise an adsorption based separation unit, for example a pressure swing adsorption unit or a temperature swing adsorption unit, preferably a pressure swing adsorption unit. However, the type of separation unit is not crucial to carry out the present invention. It is only crucial that in the second separation device, a first stream is formed which is the oxygen rich product stream, and a second stream is formed which is the second off-gas stream containing oxygen and carbon dioxide.

Any water contained in the cathode product stream may be removed by means of a dryer to obtain a cathode product stream with an acceptable water content for further processing, in particular before the cathode product stream is supplied to the first separation device. Preferably, the cathode product stream is compressed to a pressure level required by the first separation device. For example, the cathode product stream is compressed to a pressure level which is required for the operation of a downstream arranged pressure swing adsorption unit. Water may be removed preferably from the compressed cathode product stream.

Any water contained in the anode product stream may be removed by means of a dryer to obtain an anode product stream with an acceptable water content for further processing, in particular before the anode product stream is supplied to the second separation device. Preferably, the anode product stream is compressed to a pressure level required by the first separation device. For example, the anode product stream is compressed to a pressure level which is required for the operation of a downstream arranged pressure swing adsorption unit. Water may be removed preferably from the compressed anode product stream. However, it is also possible to remove water from the anode product stream before compression.

Any water contained in the recycle stream withdrawn from the oxidizing device may be removed by means of a dryer to obtain a recycle stream with an acceptable water content for further processing, in particular before the recycle stream is combined with the first feedstock stream to form the first electrolysis medium.

The first feedstock stream and the recycle stream do not have to be necessarily combined upstream of an inlet section of the electrolyzer to form the first electrolysis medium. It is only crucial that both the recycle stream and the first feedstock stream are subject to electrochemical reduction within the cathode spaces of the electrolyzer. Mixing of both streams may also occur at or even downstream of an inlet section of the electrolyzer, for instance within the cathode spaces of the electrolyzer.

According to a preferred embodiment of the process, the predetermined oxygen concentration in the second off-gas stream is adapted for the reaction of carbon monoxide with oxygen such that the oxygen is reacted with carbon monoxide in a stoichiometric ratio to form carbon dioxide in the oxidizing device. Thereby, an oxygen-free and carbon monoxide-free recycle stream can be formed. This minimizes the degradation of the electrode material, particularly in the cathode areas, as the corresponding electrodes come into contact with a minimized amount of oxygen or even no oxygen at all.

A preferred embodiment of the method is therefore characterized in that an oxygen-free and carbon monoxide-free recycle stream is formed.

According to a preferred embodiment of the process, step (d) further comprises determining the oxygen concentration in the second off-gas stream by means of a second analyzer, and step (f) further comprises transmitting a second control signal from the second analyzer, which represents the concentration of oxygen in the second off-gas stream, to the control unit. To further improve the accuracy of the control process, the oxygen concentration in the second off-gas stream is analyzed by a second analyzer and fed back as a second control signal to the control unit. For instance, in case the measured oxygen concentration in the second off-gas stream deviates from the oxygen concentration set by the controller, the controller can adjust the operation mode of the second separator such that an oxygen concentration in the second off-gas stream is obtained which is closer to or which corresponds to the predetermined oxygen concentration.

According to a preferred embodiment of the process, the cathode product stream contains carbon monoxide, hydrogen and non-converted carbon dioxide, and wherein carbon monoxide is separated from the cathode product stream in the first separation device, to form the carbon monoxide rich product stream and to form a first off-gas stream containing carbon dioxide, carbon monoxide and hydrogen. Depending on which electrolyte medium and which type of membrane or diaphragm within the electrolyzer are used for the process, and how other process parameters are designed, the cathode product stream may contain significant amounts of hydrogen. The aim of the process may be to produce a cathode product that is pure carbon monoxide. However, an alternative aim of the process may be to produce a cathode product that is a mixture of carbon monoxide and hydrogen. According to this embodiment, the first separation device separates carbon monoxide and hydrogen from the cathode product stream, so that the carbon monoxide rich product stream contains carbon monoxide and hydrogen. The first off-gas stream may contain hydrogen in addition to carbon monoxide and carbon dioxide accordingly.

In connection with the aforementioned embodiment, it is preferred that the concentration of carbon monoxide and the concentration of hydrogen in the first off-gas stream is determined by means of the first analyzer, and wherein the first control signal from the first analyzer representing the concentration of carbon monoxide and hydrogen in the first off-gas stream is submitted to the control unit, wherein the control unit is configured for controlling the second separation device such that the second off-gas stream has an oxygen concentration which is adapted
- for the reaction of carbon monoxide with oxygen in a predetermined ratio to form carbon dioxide in the oxidizing device and
- for the reaction of hydrogen with oxygen in a predetermined ratio to form water in the oxidizing device.

According to this embodiment, the first analyzer determines the carbon monoxide concentration in the first off-gas stream as well as the hydrogen concentration in the first off-gas stream. Both concentrations are then submitted to the control unit, which sets an oxygen concentration in the second off-gas stream such that oxygen reacts with hydrogen and carbon monoxide in the oxidizing device in a predetermined ratio. Thereby, water and carbon dioxide are formed in the oxidizing device. The water contained in the stream withdrawn from the oxidizing device may be removed by a drier, so that the recycle stream routed back to the cathode spaces of the electrolyzer does not contain water. Thus, the water content of the first electrolysis medium can be controlled.

In connection with the aforementioned embodiment, it is preferred that the predetermined oxygen concentration in the second off-gas stream is adapted for the reaction of carbon monoxide with oxygen such that the oxygen is reacted with carbon monoxide in a stoichiometric ratio to form carbon dioxide in the oxidizing device, and the predetermined oxygen concentration in the second off-gas stream is adapted for the reaction of hydrogen with oxygen such that the oxygen is reacted with hydrogen in a stoichiometric ratio to form water in the oxidizing device. This minimizes the degradation of the electrode material, particularly in the cathode areas, as the corresponding electrodes come into contact with a minimized amount of oxygen or even no oxygen at all.

A preferred embodiment of the method according to the aforementioned embodiment is therefore characterized in that an oxygen-free and carbon monoxide-free recycle stream is formed.

According to a preferred embodiment of the process, the first separation device comprises a first separation stage and a second separation stage, wherein carbon monoxide and hydrogen are separated from the cathode product stream in the first separation stage, to form a carbon monoxide rich product stream containing hydrogen and a carbon monoxide and carbon dioxide containing first partial stream of the first off-gas stream, and wherein carbon monoxide is separated from the carbon monoxide rich product stream containing hydrogen in the second separation stage, to form the carbon monoxide rich product stream and a carbon monoxide and hydrogen containing second partial stream of the first off-gas stream, and wherein the concentration of carbon monoxide in the first partial stream of the first off-gas stream and the concentrations of carbon monoxide and hydrogen in the second partial stream of the first off-gas stream are determined by means of the first analyzer, and wherein the control unit is configured for controlling the second separating unit such that the second off-gas stream has an oxygen concentration which is adapted
- for the reaction of carbon monoxide from the first partial stream with oxygen in a predetermined ratio to form carbon dioxide in the oxidizing device and
- for the reaction of carbon monoxide and hydrogen from the second partial stream with oxygen in a predetermined ratio to form carbon dioxide and water in the oxidizing device.

According to this embodiment, the first separation device comprises a first and a second separation stage. In the first separation stage, carbon monoxide and hydrogen are separated from the cathode product stream to form a carbon monoxide rich product stream which also contains hydrogen. In the second separation stage, said hydrogen is separated from said carbon monoxide rich product stream to obtain a carbon monoxide rich product stream further enriched in carbon monoxide and depleted of hydrogen. The off-gas stream withdrawn from the first separation stage contains non-converted carbon dioxide and carbon monoxide. It may also contain residual amounts of hydrogen. The off-gas stream withdrawn from the second separation stage contains carbon monoxide and hydrogen. The first analyzer determines the concentrations of carbon monoxide and hydrogen in said partial streams.

In connection with the aforementioned embodiment, it is preferred that the predetermined oxygen concentration in the second off-gas stream is adapted for the reaction of carbon monoxide with oxygen such that the oxygen is reacted with carbon monoxide in a stoichiometric ratio to form carbon dioxide in the oxidizing device, and the predetermined oxygen concentration in the second off-gas stream is adapted for the reaction of hydrogen with oxygen such that the oxygen is reacted with hydrogen in a stoichiometric ratio to form water in the oxidizing device. Thus, an oxygen-free, carbon monoxide-free and hydrogen-free recycle stream is preferably formed according to the setup in which the first separation device contains two separation stages.

In connection with the aforementioned embodiments, it is preferred that the first analyzer comprises a first subunit, a second subunit and an operator, wherein the concentration of carbon monoxide in the first partial stream of the first off-gas stream is determined by the first subunit, and wherein the concentrations of carbon monoxide and hydrogen in the second partial stream of the first off-gas stream are determined by the second subunit, and wherein the first subunit transmits a signal representing the concentration of carbon monoxide in the first partial stream of the first off-gas stream to the operator, and the second subunit transmits a signal representing the concentrations of carbon monoxide and hydrogen in the second partial stream of the first off-gas stream to the operator, and wherein the operator calculates the first control signal based on the control signals transmitted by the first analyzer subunits and transmits the first control signal to the control unit.

According to a preferred embodiment of the process, the first analyzer contains at least one element from the group of
- a gas chromatograph,
- a carbon monoxide sensor, and
- a hydrogen sensor.

According to a preferred embodiment of the process, the second analyzer contains at least one element from the group of
- a gas chromatograph, and
- an oxygen sensor.

It has to be understood that the "first analyzer" and the "second analyzer" are not necessarily separate devices. Both "analyzers" are rather described in relation to their function. For example, a gas chromatograph can fulfil the function of the first and second analyzer.

According to a preferred embodiment of the process, the first control signal represents the molar concentration of carbon monoxide and optionally the molar concentration of hydrogen in the first off-gas stream.

According to a further preferred embodiment of the process, the second control signal represents the molar concentration of oxygen in the second off-gas stream.

According to a further preferred embodiment of the process, the first separation device comprises at least one pressure swing adsorption (PSA) unit and/or the second separation device comprises at least one pressure swing adsorption (PSA) unit. The "and" case is preferred. In case the first separation device comprises a first and second separation stage, both stages may comprise a PSA unit. Advantage of utilizing at least one PSA unit in connection with the invention is that the purity of the respective product streams and the composition of the respective off-gas streams can be adjusted by selecting the adsorbent and the usual process parameters such as pressure and cycle time in connection with the control process as described. Several PSA units may be connected in series in regards to each separation device in order to increase the purity of the respective product stream and to vary the composition of the respective off-gas streams. In case multiple PSA units connected in series are used, the respective off-gas streams withdrawn from these units can form the "first" or "second" off-gas stream in their entirety or in part.

According to a further preferred embodiment of the process, the first separation device comprises a PSA unit, and at least one temperature swing adsorption (TSA) unit arranged downstream of the PSA unit for the separation of carbon monoxide from a carbon monoxide rich product stream containing hydrogen withdrawn from the PSA unit. In case the cathode product stream contains carbon monoxide and hydrogen, carbon monoxide and hydrogen are separated from the cathode product stream by means of a pressure swing adsorption unit first. The thereby obtained carbon monoxide rich product stream containing hydrogen is then routed to a temperature swing adsorption unit, in which carbon monoxide and hydrogen are separated to obtain a carbon monoxide rich product stream further enriched in carbon monoxide. The PSA unit may be assigned as the "first separation stage" and the TSA unit may be assigned as the "second separation stage" as described before. However, further separation stages may be present.

According to a further preferred embodiment of the process, the oxidizing device is a catalytic oxidizer. A catalytic oxidizer is preferred to a thermal oxidizer because a catalytic oxidizer can provide more favourable process conditions for the over-all process containing an electrolyzer as the main reaction device. By means of a catalyst that lowers the activation energy of the oxidation reaction of carbon monoxide with oxygen to form carbon dioxide, the corresponding reaction can be carried out at lower temperatures and with greater selectivity. This eliminates the need for extensive heating of the respective off-gas streams supplied to the oxidizing device and extensive cooling of the recycle stream withdrawn from the oxidizing device.

According to a further preferred embodiment of the process, the cathode product stream is dried before carbon monoxide is separated from it in the first separation device and/or the anode product stream is dried before oxygen is separated from it in the second separation device. The "and" option is preferred. According to a further preferred embodiment of the process, the cathode product stream is compressed before carbon monoxide is separated from it in the first separation device and/or the anode product stream is compressed before oxygen is separated from it in the second separation device. The "and" option is preferred. Preferably, the respective cathode and/or anode product stream is compressed before it is dried, whereby also the "and" option will be preferred.

According to a further preferred embodiment of the process, the first feedstock stream contains at least 90 Vol.-% carbon dioxide, preferably at least 95 Vol.-% carbon dioxide, more preferred at least 99 Vol.-% carbon dioxide.

In the following, the invention will be described with respect to the figures. The figures show preferred embodiments, to which the invention is not limited. The figures and dimensions shown therein are only schematic. The figures show:
- Fig. 1:: a first embodiment of an arrangement for carrying out a process according to the invention,
- Fig. 2:: a second embodiment of an arrangement for carrying out a process according to the invention,
- Fig. 3:: a third embodiment of an arrangement for carrying out a process according to the invention.

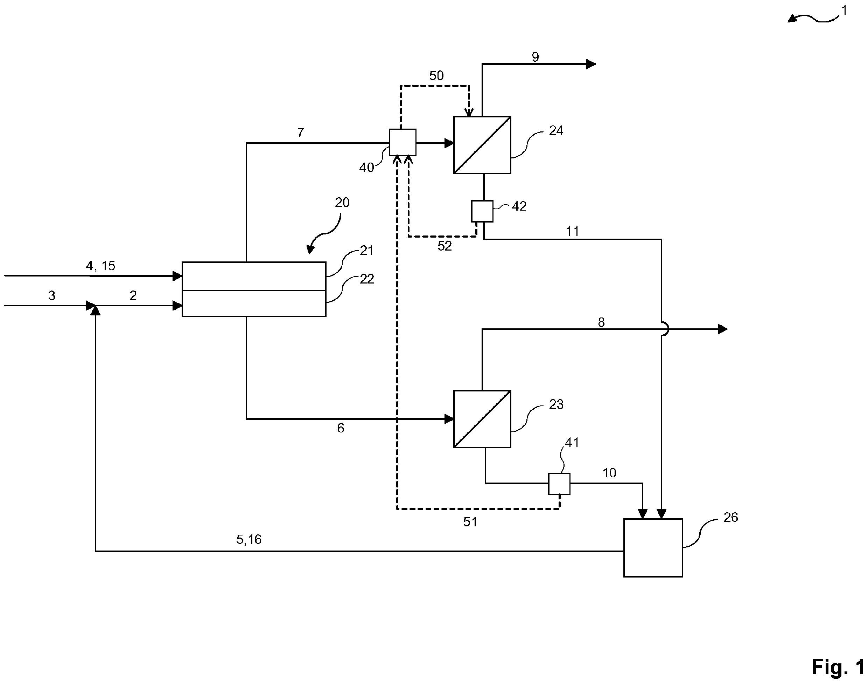

Figure 1 shows a first embodiment of an arrangement 1 for carrying out a process according to the invention. An electrolyzer 20 comprising multiple electrolysis cells forming respective anode spaces 21 and cathode spaces 22 is utilized for the electrolysis of carbon dioxide to produce a carbon monoxide rich product stream 8. A first electrolysis medium 2 containing carbon dioxide as the main component, preferably containing more than 95 % per volume carbon dioxide, is supplied as a stream to the cathode spaces 22 of the electrolyzer 20. The stream of the first electrolysis medium 2 is formed by combining a first feedstock stream 3 and a recycle stream 5. Main component of the first feedstock stream 3 is carbon dioxide, preferably with a content of more than 95 % per volume carbon dioxide within the first feedstock stream 3. Main component of the recycle stream 5 is also carbon dioxide, preferably with a content of more than 98 % per volume carbon dioxide within the recycle stream 5. The recycle stream 5 may contain minor amounts of oxygen and carbon monoxide, preferably less than 50 ppmv carbon monoxide and oxygen each. The second feedstock stream 4 is a 0.1 molar aqueous solution of potassium hydroxide. A second electrolysis medium 15 is formed by said second feedstock stream 4, which is supplied to the anode spaces 21 of the electrolyzer 20 to from oxygen as the main anode product.

The design parameters of the process are chosen such that the formation of hydrogen produced in the cathode spaces 22 of the electrolyzer is suppressed as much as possible, so that a cathode product stream 6 withdrawn from the cathode spaces 22 mainly contains carbon monoxide as the target product and non-converted carbon dioxide. Due to the migration of carbon dioxide from the respective cathode spaces 22 to the respective anodes spaces 21 of the electrolyzer 20, the anode product steam does not only contain oxygen as the main anode side product, but also significant amounts of carbon dioxide.

The cathode product stream withdrawn from the cathode spaces 22 of the electrolyzer 20 is supplied to a first separation device 23, which comprises for example a pressure swing adsorption (PSA) unit. In the first separation device 23, carbon monoxide is separated from the cathode product stream 6, whereby a carbon monoxide rich product stream 8 is formed, which has a carbon monoxide content of at least 98 Vol.-%. Said carbon monoxide rich product stream 8 is withdrawn from the process for further processing, for example in a process arranged downstream of the process 1 (not shown). From the first separation device 23 also a first off-gas stream 10 is withdrawn which comprises carbon monoxide not separated from the cathode product stream 6 and non-converted carbon dioxide.

A first analyzer 41, which is designed as an online gas analyzer, permanently determines the molar concentration of carbon monoxide in the first off-gas stream 10. On the basis of the analysis performed by the first analyzer 41, a control signal 51 is transmitted from the first analyzer 41 to a control unit 40. The control signal 51 is a control variable in regards to the control operation performed by the control unit 40.

The anode product stream withdrawn from the anode spaces 21 of the electrolyzer 20 is supplied to a second separation device 24, which comprises for example a pressure swing adsorption (PSA) unit. In the second separation device 24, oxygen is separated from the anode product stream 7, whereby an oxygen rich product stream 9 is formed, which has an oxygen content of at least 98 Vol.-%. Said oxygen rich product stream 9 is withdrawn from the process for further processing, for example in a process arranged downstream of the process 1 (not shown). Alternatively, the oxygen rich product stream 9 is vented to the atmosphere. From the second separation device 24 also a second off-gas stream 11 is withdrawn which comprises oxygen not separated from the anode product stream 7 and non-converted carbon dioxide.

The first off-gas stream 10 and the second off-gas stream 11 are supplied to an oxidizing device 26, for instance a catalytic oxidizer. In the oxidizing device 26, the oxygen contained in the second off-gas stream 11 is reacted with carbon monoxide present in the first off-gas stream 10. That is, in the oxidizing device 26, the first off-gas stream 10 and the second off-gas stream 11 are mixed such that a reaction between carbon monoxide and oxygen to form carbon dioxide takes place. Thereby, an oxygen depleted stream 16 is formed, which is withdrawn from the oxidizing device 26 to form the recycle stream 5.

The control unit 40 adjusts the operation of the second separation device 24 to set a predetermined oxygen concentration in the second off-gas stream 11 so that in the oxidizing device 26, stoichiometric oxidation of carbon monoxide occurs. This is possible due to the information regarding the molar concentration of carbon monoxide in the first off-gas stream, said information transmitted by the first analyzer 41 via control signal 51 to the control unit 40. Based on the information received from the first analyzer 41, the control unit 40 generates an input signal 50, which is a manipulated variable, to adjust the operation of the second separation device 24 such that the second off-gas stream 11 with said predetermined oxygen concentration is generated. Thereby, an oxygen depleted stream 16 is formed in the oxidizing device 26, which is essentially free of oxygen and carbon monoxide. Said oxygen depleted stream 16 forms the recycle stream 5, which is combined with the first feedstock stream 3 to form the first electrolysis medium.

To improve the control process, a second analyzer 42, which is designed as an online gas analyzer, permanently determines the molar concentration of oxygen in the second off-gas stream 11. The molar concentration of oxygen in the second off-gas stream determined by the analyzer has to be differentiated from the predetermined oxygen concentration set by the control unit 40. The information regarding the actually determined oxygen concentration in the second off-gas stream 11 is fed back via a second control signal 52, which is a control variable, to the control unit 40. Due to permanent feedback control about the determined oxygen concentration in the second off-gas stream 11, the operation of the second separation device is optimized such that an optimized predetermined oxygen concentration in the second off-gas stream 11 is set by the control unit 40 for stoichiometric conversion of oxygen with carbon monoxide in the oxidizing device 26 to form carbon dioxide.

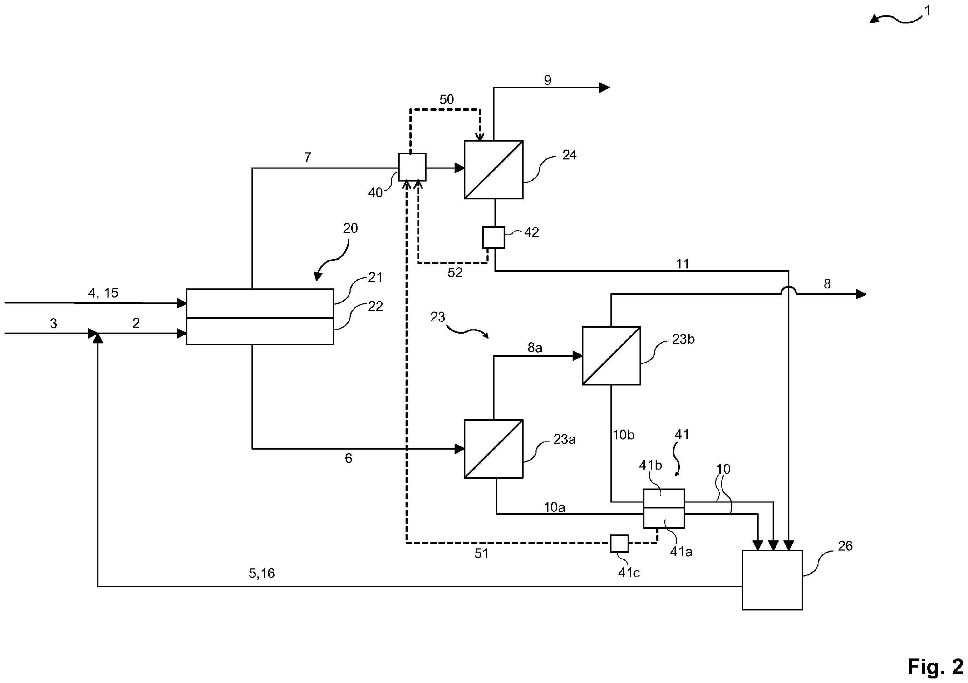

Figure 2 shows a second embodiment of an arrangement 1 for carrying out a process according to the invention. In the following description, only differences compared to the configuration of the process according to Figure 1 are described.

The electrolyzer 20 and the process parameters according to the embodiment of Figure 2 are configured such that the cathode product stream contains significant amounts of hydrogen in addition to carbon monoxide as the main component of stream 6.

Hence, the separation device 23 comprises a first stage 23a and a second stage 23b. Both stages 23a and 23b may comprise a pressure swing adsorption (PSA) unit. In the first separation stage 23a, a carbon monoxide rich stream which also comprises significant amounts of hydrogen 8a is separated from the cathode product stream 6. A first partial stream 10a of the first off-gas stream 10 is withdrawn from the first separation stage 23a. Said first partial stream 10a comprises the non-converted carbon dioxide and carbon monoxide not separated from the cathode product stream 6. The carbon monoxide rich product stream 8a is routed to the second separation stage 23b of first separation device 23 to separate carbon monoxide from hydrogen contained in stream 8a. The resulting carbon monoxide rich product stream 8, which is enriched in carbon monoxide compared to stream 8a, is withdrawn from the second stage 23b and further processed (not shown). A second partial stream 10b of the first off-gas stream 10 is withdrawn from the second separation stage 23b. Said second partial stream 10b comprises carbon monoxide and hydrogen in the main. The first partial off-gas stream 10a and the second partial off-gas stream 10b together form the first off-gas stream 10.

According to the example of Figure 2, the first analyzer 41 comprises a first subunit 41a and a second subunit 41b. The first subunit 41a determines the molar concentration of carbon monoxide in the first partial stream 10a of the first off-gas stream 10. The second subunit 41b determines the molar concentrations of carbon monoxide and hydrogen in the second partial stream 10b of the first off-gas stream 10. Based on this information, the analyzer generates an output signal which represents the concentrations of carbon monoxide and hydrogen in the respective partial stream 10a and 10b. Said output signal is processed by an operator 41c, which forms part of the first analyzer 41. The operator 41 calculates a control signal 51 based on the molar concentrations of carbon monoxide and hydrogen in the partial streams 10a and 10b which is transmitted to the control unit 40. The control unit 40 sets a predetermined molar oxygen concentration in the second off-gas stream 11 so that hydrogen and carbon monoxide contained in the first off-gas stream 10 are oxidized in a stoichiometric ratio with oxygen contained in the second off-gas stream to afford carbon dioxide respectively water in the oxidizing device 26.

In contrast to the embodiment shown in Figure 1, the oxygen depleted stream 16 contains water in addition to carbon dioxide. Said water can be removed by means of a drier before the oxygen depleted stream 16 forms the recycle stream 5.

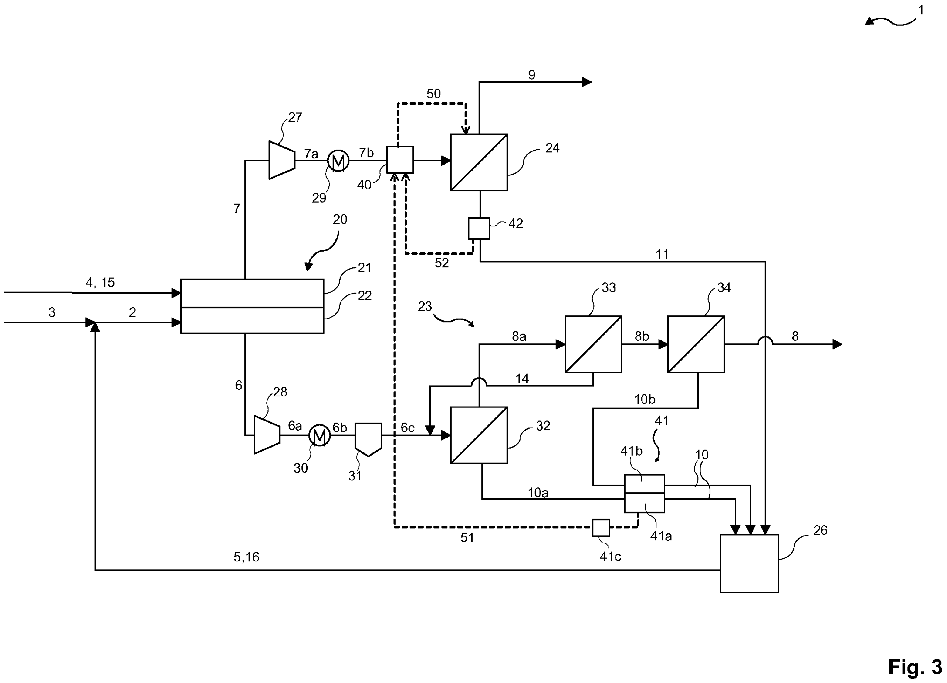

Figure 3 shows a further embodiment of the process according to the invention, in which the cathode product stream contains carbon monoxide and hydrogen. The cathode product stream 6 is compressed in a compressor 28 to a pressure which is required by the first separation device 23, for example in case the second separation device 23 comprises a pressure swing adsorption unit. The compressed stream 6a is cooled in a heat exchanger 30, supplied to a dryer 31, which is a separator, and afterwards supplied as stream 6c to the first separation device 23.

The anode product stream 7 is compressed in a compressor 27 to a pressure which is required by the second separation device 24, for example in case the second separation device 24 contains a pressure swing adsorption unit. The compressed stream 7a is cooled in a heat exchanger 29, dried (not shown) and afterwards supplied to the second separation device 24 as stream 7b.

The first separation device 23 contains two separations stages, whereby the first separation stage comprises a pressure swing adsorption (PSA) unit 32, and the second separation stage comprises a temperature swing adsorption (TSA) unit 33 and a membrane unit 34. The membrane unit 34 is arranged downstream of the TSA unit. The carbon monoxide concentration in the carbon monoxide rich product stream 8 is higher than in stream 8b withdrawn from the TSA unit. The carbon monoxide concentration in the carbon monoxide rich product stream 8b is in turn higher than in stream 8a withdrawn from the PSA unit. An off-gas stream withdrawn from the TSA unit is recycled back to the PSA unit. The second partial stream 10b of the first off-gas stream is withdrawn from the membrane unit 34. In the membrane unit 34, the carbon monoxide concentration of the cathode product stream is further increased due to the selectivity of the membrane unit 34 for hydrogen. Hydrogen is passing the (pores of the) membranes of the membrane unit 34 forming a permeate stream, here stream 8. Carbon monoxide is not passing the membranes and thus forms a retentate stream, here stream 10b. The retentate stream 8 is a pure carbon monoxide stream, whereas the permeate stream 10b is a hydrogen stream which may contain residual amounts of carbon monoxide.

### List of reference signs

- 1: process / arrangement
- 2: first electrolysis medium
- 3: first feedstock stream (carbon dioxide)
- 4: second feedstock stream (water)
- 5: recycle stream
- 6: cathode product stream
- 6a: compressed cathode product stream
- 6b: compressed and cooled cathode product stream
- 6c: compressed, cooled and dried cathode product stream
- 7: anode product stream
- 7a: compressed anode product stream
- 7b: cooled and compressed anode product stream
- 8: carbon monoxide rich product stream
- 8a, 8b: carbon monoxide rich product stream comprising hydrogen
- 9: oxygen rich product stream
- 10: first off-gas stream
- 10a: first partial stream of first off-gas stream
- 10b: second partial stream of first off-gas stream
- 11: second off-gas stream
- 14: TSA unit off-gas stream
- 15: second electrolysis medium
- 16: oxygen depleted stream
- 20: electrolyzer
- 21: anode spaces
- 22: cathode spaces
- 23: first separation device
- 23a: first stage of first separation device
- 23b: second stage of first separation device
- 24: second separation device
- 26: oxidizing device
- 27,28: compressor
- 29, 30: heat exchanger (cooler)
- 31: dryer (separator)
- 32: pressure swing adsorption (PSA) unit
- 33: temperature swing adsorption (TSA) unit
- 34: membrane unit
- 40: control unit
- 41: first analyzer
- 41a: first subunit of first analyzer
- 41b: second subunit if first analyzer
- 41c: operator of first analyzer
- 42: second analyzer
- 50: control unit input signal (manipulated variable)
- 51: first control signal (control variable)
- 52: second control signal (control variable)

## Claims

1. A process (1) for producing a carbon monoxide containing product by electrolysis of carbon dioxide comprising
(a) Providing a first electrolysis medium (2) comprising a first feedstock stream (3) containing carbon dioxide and a recycle stream (5) containing carbon dioxide, and providing a second electrolysis medium (15) comprising a second feedstock stream (4) containing water;
(b) Converting the first and second electrolysis medium in an electrolyzer (20), which comprises multiple electrolysis cells, each cell comprising a cathode space for forming a cathode product and an anode space for forming an anode product, wherein
- in the respective cathode spaces (22) a cathode product stream (6) is formed, which contains carbon monoxide formed by the electrochemical reduction of carbon dioxide of the first electrolysis medium (2) and which contains non-converted carbon dioxide, and
- in the respective anode spaces (21) an anode product stream (7) is formed, which contains oxygen and non-converted carbon dioxide;
(c) Separating carbon monoxide from the cathode product stream (6) in a first separation device (23) to form a carbon monoxide rich product stream (8) and a first off-gas stream (10) containing carbon monoxide and carbon dioxide, and determining the carbon monoxide concentration in the first off-gas stream (10) by means of a first analyzer (41);
(d) Separating oxygen from the anode product stream (7) in a second separation device (24) to form an oxygen rich product stream (9) and a second off-gas stream (11) containing oxygen and carbon dioxide,
(e) Supplying the first off-gas stream (10) and the second off-gas stream (11) to an oxidizing device (26), in which the oxygen of the second off-gas stream (11) is at least partially reacted with carbon monoxide present in the first off-gas stream (10) to form carbon dioxide, whereby an oxygen-depleted stream (16) containing carbon dioxide is formed;
(f) Transmitting a first control signal (51), which represents the concentration of carbon monoxide in the first off-gas stream, from the first analyzer (41) to a control unit (40), wherein the control unit is configured for controlling the second separation device (24) such that the second off-gas stream (11) has a predetermined oxygen concentration, wherein said predetermined oxygen concentration is adapted for the reaction of carbon monoxide with oxygen in a predetermined ratio to form carbon dioxide in the oxidizing device (26);
(g) Withdrawing said oxygen-depleted stream (16) containing carbon dioxide from the oxidizing device (26) to form the recycle stream (5), and combining said recycle stream (5) with the first feedstock stream (3) to form the first electrolysis medium (2).

2. The process according to claim 1, wherein the predetermined oxygen concentration in the second off-gas stream (11) is adapted for the reaction of carbon monoxide with oxygen such that the oxygen is reacted with carbon monoxide in a stoichiometric ratio to form carbon dioxide in the oxidizing device (26).

3. The process according to claim 2, wherein an oxygen-free and carbon monoxide-free recycle stream (5) is formed.

4. The process according to any one of the preceding claims, wherein step (d) further comprises determining the oxygen concentration in the second off-gas stream (11) by means of a second analyzer, and step (f) further comprises transmitting a second control signal from the second analyzer (42), which represents the concentration of oxygen in the second off-gas stream (11), to the control unit (40).

5. The process according to any one of the preceding claims, wherein the cathode product stream (6) contains carbon monoxide, hydrogen and non-converted carbon dioxide, and wherein carbon monoxide is separated from the cathode product stream in the first separation device (23), to form the carbon monoxide rich product stream (8) and to form a first off-gas stream (10) containing carbon dioxide, carbon monoxide and hydrogen.

6. The process according to claim 5, wherein the concentration of carbon monoxide and the concentration of hydrogen in the first off-gas stream (10) is determined by means of the first analyzer (41), and wherein the first control signal (51) from the first analyzer (41) representing the concentration of carbon monoxide and hydrogen in the first off-gas stream (10) is submitted to the control unit (40), wherein the control unit (40) is configured for controlling the second separating unit such that the second off-gas stream (11) has an oxygen concentration which is adapted
- for the reaction of carbon monoxide with oxygen in a predetermined ratio to form carbon dioxide in the oxidizing device (26) and
- for the reaction of hydrogen with oxygen in a predetermined ratio to form water in the oxidizing device (26).

7. The process according to claim 6, wherein the predetermined oxygen concentration in the second off-gas stream (11) is adapted for the reaction of carbon monoxide with oxygen such that the oxygen is reacted with carbon monoxide in a stoichiometric ratio to form carbon dioxide in the oxidizing device (26), and
the predetermined oxygen concentration in the second off-gas stream (11) is adapted for the reaction of hydrogen with oxygen such that the oxygen is reacted with hydrogen in a stoichiometric ratio to form water in the oxidizing device (26).

8. The process according to claim 7, wherein an oxygen-free, carbon monoxide-free and hydrogen-free recycle stream (5) is formed.

9. The process according to any of claims 5 to 8, wherein the first separation device (23) comprises a first separation stage (23a) and a second separation stage (23b), wherein carbon monoxide and hydrogen are separated from the cathode product stream (6) in the first separation stage (23a), to form a carbon monoxide rich product stream (8a) containing hydrogen and a carbon monoxide and carbon dioxide containing first partial stream (10a) of the first off-gas stream (10), and wherein carbon monoxide is separated from the carbon monoxide rich product stream containing hydrogen in the second separation stage (23b), to form the carbon monoxide rich product stream (8) and a carbon monoxide and hydrogen containing second partial stream (10b) of the first off-gas stream (10), and wherein the concentration of carbon monoxide in the first partial stream (10a) of the first off-gas stream (10) and the concentrations of carbon monoxide and hydrogen in the second partial stream (10b) of the first off-gas stream (10) are determined by means of the first analyzer (41), and wherein the control unit (40) is configured for controlling the second separation device (24) such that the second off-gas stream (11) has an oxygen concentration which is adapted
- for the reaction of carbon monoxide from the first partial stream (10a) with oxygen in a predetermined ratio to form carbon dioxide in the oxidizing device (26) and
- for the reaction of carbon monoxide and hydrogen from the second partial stream (10b) with oxygen in a predetermined ratio to form carbon dioxide and water in the oxidizing device (26).

10. The process according to claim 9, wherein the predetermined oxygen concentration in the second off-gas stream (11) is adapted for the reaction of carbon monoxide with oxygen such that the oxygen is reacted with carbon monoxide in a stoichiometric ratio to form carbon dioxide in the oxidizing device (26), and
the predetermined oxygen concentration in the second off-gas stream (11) is adapted for the reaction of hydrogen with oxygen such that the oxygen is reacted with hydrogen in a stoichiometric ratio to form water in the oxidizing device (26).

11. The process according to claim 10, wherein an oxygen-free, carbon monoxide-free and hydrogen-free recycle stream (5) is formed.

12. The process according to any of claims 9 to 11, wherein the first analyzer (41) comprises a first subunit (41a), a second subunit (41b) and an operator (41c), wherein the concentration of carbon monoxide in the first partial stream (10a) of the first off-gas stream is determined by the first subunit (41a), and wherein the concentrations of carbon monoxide and hydrogen in the second partial stream (10b) of the first off-gas stream (10) are determined by the second subunit (41b), and wherein the first subunit (41a) transmits a signal representing the concentration of carbon monoxide in the first partial stream (10a) of the first off-gas stream (10) to the operator (41c), and the second subunit (41b) transmits a signal representing the concentrations of carbon monoxide and hydrogen in the second partial stream (10b) of the first off-gas stream (10) to the operator (41c), and wherein the operator (41c) calculates the first control signal (51) based on the control signals transmitted by the first analyzer subunits (41a, 41b) and transmits the first control signal (51) to the control unit (40).

13. The process according to any of the preceding claims, wherein the first analyzer (41) contains at least one element from the group of
- a gas chromatograph,
- a carbon monoxide sensor, and
- a hydrogen sensor.

14. The process according to any of the preceding claim, wherein the second analyzer (42) contains at least one element from the group of
- a gas chromatograph, and
- an oxygen sensor.

15. The process according to any of the preceding claims, wherein the first control signal (51) represents the molar concentration of carbon monoxide and optionally the molar concentration of hydrogen in the first off-gas stream (10).

16. The process according to any of the preceding claims, wherein the second control signal (52) represents the molar concentration of oxygen in the second off-gas stream (11).

17. The process according to any of the preceding claims, wherein the first separation device (23) comprises at least one pressure swing adsorption (PSA) unit and/or the second separation device (24) comprises at least one pressure swing adsorption (PSA) unit.

18. The process according to any of the preceding claims, wherein the first separation device (23) comprises a PSA unit (32), and at least one temperature swing adsorption (TSA) unit (33) arranged downstream of the PSA unit (32) for the separation of carbon monoxide from a carbon monoxide rich product stream containing hydrogen withdrawn from the PSA unit (32).

19. The process according to any of the preceding claims, wherein the oxidizing device (26) is a catalytic oxidizer.

20. The process according to any of the preceding claims, wherein the cathode product stream (6) is dried before carbon monoxide is separated from it in the first separation device (23) and/or the anode product stream (7) is dried before oxygen is separated from it in the second separation device (24).

21. The process according to any of the preceding claims, wherein the first feedstock stream (3) contains at least 90 Vol.-% carbon dioxide, preferably at least 95 Vol.-% carbon dioxide, more preferred at least 99 Vol.-% carbon dioxide.
